(19) **Europäisches Patentamt European Patent Office Office européen des brevets**

(11) **EP 2 431 092 B1**

(12) **EUROPEAN PATENT SPECIFICATION**

(45) Date of publication and mention of the grant of the patent:
**17.07.2019 Bulletin 2019/29**

(51) Int Cl.:
*B01J 23/63* (2006.01)    *B01D 53/94* (2006.01)
*B01J 37/04* (2006.01)    *B01J 37/08* (2006.01)
*B01J 35/02* (2006.01)    *B01J 37/00* (2006.01)
*B01J 37/02* (2006.01)    *B01J 23/10* (2006.01)
*B01J 23/46* (2006.01)

(21) Application number: **10764488.2**

(22) Date of filing: **14.04.2010**

(86) International application number:
**PCT/JP2010/056708**

(87) International publication number:
**WO 2010/119904 (21.10.2010 Gazette 2010/42)**

(54) **EXHAUST GAS PURIFYING CATALYST AND METHOD FOR PRODUCING SAME**

ABGASREINIGUNGSKATALYSATOR UND VERFAHREN ZU SEINER HERSTELLUNG

CATALYSEUR DE PURIFICATION DES GAZ D'ÉCHAPPEMENT ET SON PROCÉDÉ DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.04.2009 JP 2009098356**
           **19.05.2009 JP 2009121133**

(43) Date of publication of application:
**21.03.2012 Bulletin 2012/12**

(73) Proprietor: **Cataler Corporation Shizuoka 437-1492 (JP)**

(72) Inventors:
• **MATSUEDA, Satoshi Shizuoka 437-1492 (JP)**
• **HIRAI, Akimasa Shizuoka 437-1492 (JP)**
• **TAKI, Kenichi Shizuoka 437-1492 (JP)**
• **YABUZAKI, Yuji Shizuoka 437-1492 (JP)**
• **HOSHINO, Sho Shizuoka 437-1492 (JP)**

(74) Representative: **Mai Dörr Besier European Patent Attorneys European Trademark Attorneys Patentanwälte Kreuzberger Ring 64 65205 Wiesbaden (DE)**

(56) References cited:
EP-A1- 1 728 552     EP-A1- 1 974 796
EP-A1- 2 298 444     WO-A1-2005/102524
WO-A1-2007/058867     JP-A- 2006 334 490
JP-T- 2002 515 823

**Description**

Technical Field

The present invention relates to exhaust gas purification techniques.

Background Art

Recently, emission controls on automobiles, etc. have been strengthened. This brings about the need to develop various kinds of exhaust gas-purifying catalysts for purifying hydrocarbon (HC), carbon monoxide (CO), nitrogen oxide ($NO_x$), and the like in the exhaust gas.

For example, an exhaust gas-purifying catalyst comprising a porous carrier, cerium oxide supported on the porous carrier, and catalytic precious metal supported on the porous carrier is disclosed in Jpn. Pat. Appln. KOKAI Publication No. 8-155302. The cerium oxide has an ability to store oxygen. The catalyst may exhibit a higher exhaust gas-purifying performance as compared with a catalyst which does not include the cerium oxide.

However, further improvements need to be made on the exhaust gas-purifying performance of the exhaust gas-purifying catalysts.

Disclosure of Invention

An object of the present invention is to provide a technique which can achieve a high exhaust gas-purifying performance.

According to the present invention, there is provided an exhaust gas-purifying catalyst comprising:

a first oxide particle with an oxygen storage capacity;
one or more second oxide particles partially or entirely covering a surface of the first oxide particle and having an oxygen storage capacity lower than that of the first oxide particle, an average particle diameter $D_{av}$ of the one or more second oxide particles obtained by scanning electron microscope observation being smaller than that of the first oxide particle;
precious metal particles supported on at least one of the second oxide particles, wherein the second oxide is cerium-free or the second oxide contains cerium and the cerium content of the second oxide is smaller than that of the first oxide, wherein 40 to 50 % of the surface of the first oxide particle is covered with the one or more of the second oxide particles and wherein the average particle diameter $D_{AV}$ and the surface coverage of the first oxide particle of 40-50 % both are determined in accordance with the description in section "Best Mode for Carrying out the Invention".

According to the present invention, there is provided an exhaust gas-purifying catalyst as defined above and produced by drying and firing a slurry comprising:

a first oxide particle with an oxygen storage capacity;
composite particles containing precious metal particles and second oxide particles, the second oxide particles supporting the precious metal particles and having an oxygen storage capacity lower than that of the first oxide particle, and the second oxide particles having an average particle diameter D50 obtained by a laser diffraction and scattering method smaller than that of the first oxide particle; and
citric acid.

According to the present invention, there is provided a method of producing an exhaust gas-purifying catalyst as defined above and comprising:

drying and firing a slurry containing a first oxide particle with an oxygen storage capacity;
composite particles containing precious metal particles and second oxide particles, the second oxide particles supporting the precious metal particles and having an oxygen storage capacity lower than that of the first oxide particle, and the second oxide particles having an average particle diameter D50 obtained by a laser diffraction and scattering method smaller than that of the first oxide particle; and
citric acid.

Brief Description of Drawings

FIG. 1 is a cross-sectional view schematically showing an exhaust gas-purifying catalyst according to one embodiment of the present invention;
FIG. 2 is a scanning electron microscope (SEM) photograph of a surface of a first oxide particle contained in a powder according to Example 1; and
FIG. 3 is an SEM photograph of a surface of a first oxide particle contained in a powder according to Example 20.

Best Mode for carrying out the Invention

Embodiments of the present invention will be described in detail with reference to the drawings. In the drawings, elements that are the same or similar in function are given the same reference numerals, and overlapped description will not be repeated. As used herein, the term "composite oxide" means not a mere physical mixture of two or more oxides but a material comprising two or more oxides that form a solid solution.

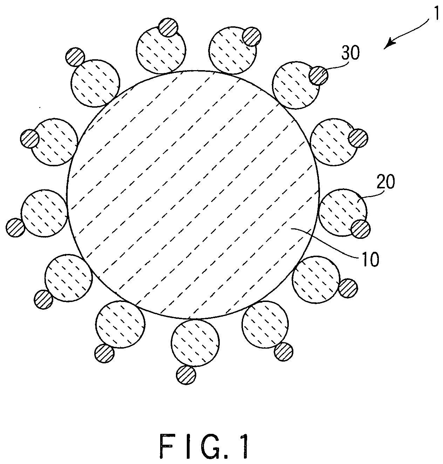

FIG. 1 is a cross-sectional view schematically showing an exhaust gas-purifying catalyst according to one embodiment of the present invention. An exhaust gas-purifying catalyst 1 shown in FIG. 1 contains a first oxide particle 10, second oxide particles 20, and precious metal particles 30. A part or all of a surface of the first oxide particle 10 is covered with the second oxide particles 20. The precious metal particles 30 are supported on the second oxide particles 20.

The first oxide has an oxygen storage capacity. The first oxide has a role in occluding and releasing oxygen in the exhaust gas to mitigate a variation in an air-fuel ratio of the exhaust gas. As the first oxide, for example, an oxide containing cerium is used. Typically, a composite oxide of cerium oxide and zirconium oxide is used as the first oxide.

The first oxide may be a composite oxide that further contains rare earth elements other than the cerium. The rare earth elements such as yttrium, neodymium, lanthanum, and praseodymium may be used or two or more of them may be used in combination. The rare earth elements allow the exhaust gas-purifying catalyst 1 to improve the $NO_X$ purifying performance without decreasing the HC purifying performance thereof.

An average particle diameter $D_{av}$ obtained by SEM observation of the first oxide particle 10 is, for example, in a range of 1 to 100 $\mu$m, typically in a range of 5 to 30 $\mu$m, preferably in a range of 5 to 10 $\mu$m. When the particle diameter is too small, an aggregation of the second oxide particles 20 becomes relatively easy to occur and the durability of the exhaust gas-purifying catalyst 1 may be reduced. When the particle diameter is too large, it becomes relatively difficult to make the second oxide particles 20 uniformly dispersed on the first oxide particle 10 and the durability of the exhaust gas-purifying catalyst 1 may be reduced. A relationship between the average particle diameter $D_{av}$ of the first oxide particle 10 and the one of the second oxide particles 20 will be described later.

The "average particle diameter $D_{av}$ obtained by SEM observation" is determined, for example, as follows. First, a sample is placed on an SEM sample stand. Then, the sample is observed, for example, at 2500-fold to 50000-fold magnification to obtain an SEM image. In the SEM image, Areas $A_k$ which is occupied by the particle other than the particles of which a part cannot be observed by overlapping with other particles (k=1,2, ..., n; n represents the number of the particles in the SEM image other than the particles of which a part cannot be observed by overlapping with other particles; the same holds true for the following description) are measured. Then, an equivalent-circle diameter $d_k$ corresponding to each of the areas $A_k$ is determined. That is, the particle diameter $d_k$ which satisfies the following formula (I) is determined. Then, the particle diameter $d_k$ is arithmetically averaged in the range of particle number n to determine the particle diameter as to the SEM image.

$$A_k = \pi \times \left( \frac{d_k}{2} \right)^2 \qquad (I)$$

The above SEM observations are performed at 100 positions selected at random. Then, particle diameters as to the SEM images are determined by the above described method, and the resulting diameters are arithmetically averaged. Thus, the average particle diameter $D_{av}$ is obtained. However, in this case, a standard deviation of the particle diameter of the first oxide particle 10 is set to 20 $\mu$m or less, and the standard deviation of the particle diameter of the second oxide particles 20 is set to 0.2 $\mu$m or less.

The number of the second oxide particles 20 covering the surface of the first oxide particle 10 may be one or two or more. The number of the second oxide particles 20 is preferably large in order to effectively use the oxygen storage capacity of the first oxide particle 10.

In the present invention the second oxide particles 20 cover a part of the surface of the first oxide particle 10 due to the following reasons. For example, when a plurality of the second oxide particles 20 are supported on a first oxide particle 10, typically, at least two of the second oxide particles 20 do not come into contact with each other. In this case, even if the exhaust gas-purifying catalyst 1 is used for a long period of time, sintering or aggregating of the second oxide particles 20 on the first oxide particle 10 is relatively hard to occur. Therefore, in this case, contacts among the precious metal particles 30 supported on the second oxide particles 20 are relatively hard to occur. Therefore, a decrease in catalytic activity caused by sintering or aggregating

of the precious metal particles 30 is relatively hard to occur.

Hence, 40 to 50% of the surface of the first oxide particle 10 is covered with the one or more of the second oxide particles 20. When the ratio of covered is too small, the oxygen storage capacity of the first oxide particle 10 may not be used effectively. When the ratio of covered is too large, for example, in the case where conditions for use of the exhaust gas-purifying catalyst 1 become severe, aggregating of the second oxide particles 20 becomes relatively easy to occur. Thereby the performance of the exhaust gas-purifying catalyst 1 may be decreased.

The ratio of the surface area of the first oxide particle 10 covered with the second oxide particles 20 is determined, for example, as follows.

First, the exhaust gas-purifying catalyst 1 is subjected to surface observation using SEM. Specifically, the surface of the first oxide particle 10 contained in the exhaust gas-purifying catalyst 1 is observed at 2500-fold to 50000-fold magnification.

Subsequently, in the obtained observation image, an area S1 of a region which is occupied by the first oxide particle 10 (a portion covered with the second oxide particles 20 is also included) is determined. Similarly, in the obtained observation image, an area S2 of a region which is occupied by the second oxide particles 20 covering the surface of the first oxide particle 10 is determined.

The above-described SEM observations are performed at 100 positions selected at random. As for each of the positions, the areas S1 and S2 are measured and the ratio is calculated by the following formula (II). Subsequently, an arithmetic mean of the obtained values of the twenty particles is calculated. Thus, the ratio of the surface of the first oxide particles 10 covered with the second oxide particles 20 is determined.

$$\mathrm{Coverage\ (\%)} = \frac{S2}{S1} \times 100 \qquad\qquad (II)$$

The oxygen storage capacity of the second oxide is lower than that of the first oxide. For example, when the first oxide contains cerium, the cerium content of the second oxide is lower than that of the first oxide. The second oxide may not have the oxygen storage capacity. For example, the second oxide may not substantially contain cerium. Alternatively, the second oxide may not contain cerium.

As the second oxide, for example, an oxide which contains not cerium but zirconium is used. Typically, as the second oxide, a composite oxide of zirconium and a rare earth element other than cerium is used. The rare earth elements such as yttrium, neodymium, lanthanum, and praseodymium may be used or a combination of two or more of them may be used. Further, the composite oxide of zirconium and a rare earth element other than cerium may contain cerium in a range that does not affect the performance of the exhaust gas-purifying catalyst 1.

The average particle diameter $D_{av}$ of the second oxide particles 20 is smaller than the average particle diameter $D_{av}$ of the first oxide particle 10. Thus, a distance between the first oxide particle 10 and the precious metal particles 30 supported on the second oxide particles 20 is relatively short. Therefore, these precious metals can benefit from the effects provided by the oxygen storage capacity of the first oxide efficiently. Namely, these precious metals can catalyze an exhaust purification reaction in an optimal or nearly optimal air-fuel ratio.

The average particle diameter $D_{av}$ of the second oxide particles 20 is set, for example, in a range of 0.05 to 0.5 $\mu$m, typically in a range of 0.1 to 0.3 $\mu$m. When the particle diameter is too small, the aggregating of the second oxide particles 20 becomes relatively easy to occur and the durability of the exhaust gas-purifying catalyst 1 may be reduced. When the particle diameter is too large, the distance between the first oxide particle 10 and the precious metal particles 30 supported on the second oxide particles 20 becomes relatively long. Thus, it may be difficult for the precious metals to benefit from the effects provided by the oxygen storage capacity of the first oxide efficiently, thereby the exhaust gas-purifying performance of the exhaust gas-purifying catalyst 1 may be reduced. The average particle diameter $D_{av}$ of the second oxide particles 20 is typically larger than that of the precious metal particles 30.

A ratio of the average particle diameter $D_{av}$ of the second oxide particles 20 to the average particle diameter $D_{av}$ of the first oxide particle 10 is, for example, in a range of 0.0005 to 0.5, typically in a range of 0.003 to 0.06. When the ratio is too low, the aggregating of the second oxide particles 20 becomes relatively easy to occur and the durability of the exhaust gas-purifying catalyst 1 may be reduced. When the ratio is too high, the distance between the first oxide particle 10 and the precious metal particles 30 supported on the second oxide particles 20 becomes relatively long. Thus, it may be difficult for the precious metals to benefit from the effects provided by the oxygen storage capacity of the first oxide efficiently, thereby the exhaust gas-purifying performance of the exhaust gas-purifying catalyst 1 may be reduced.

The molar ratio of the second oxide to the first oxide is, for example, in a range of 1:30 to 20:1, typically in a range of 1:1 to 10:1. When the ratio is too low, an amount of precious metal which can be introduced into unit mass of the exhaust gas-purifying catalyst 1 is decreased and its initial performance may be reduced. When the ratio is too high, the aggregating of the second oxide particles 20 becomes relatively easy to occur and the durability of the exhaust gas-purifying catalyst 1 may be reduced.

The precious metals play a role in catalyzing HC and CO oxidation reactions and $NO_X$ reduction reaction. As these precious metals, for example, platinum group metals are used. Typically, as these precious metals, rhodium, platinum, and palladium are used, or a combination of two or more thereof is used.

The precious metal particles 30 are supported on at least one of the second oxide particles 20. The number of the precious metal particles 30 supported on each second oxide particle 20 may be one or two or more.

The precious metal particles 30 may cover a whole surface of a second oxide particle 20 except a portion of contact with the first oxide particle 10, or it may cover only a part of the surface of a second oxide. The precious metal particles 30 are preferably supported on the second oxide particles 20 apart from one another and preferably interspersed uniformly on the second oxide particles 20, in order to increase the surface in contact with surroundings other than the second oxide.

The constituent elements other than oxygen of the second oxide hardly change in the oxidation number associated with variation of the composition of atmosphere as compared with the constituent elements other than oxygen of the first oxide. Accordingly, in the case where the precious metal particles 30 are preferentially supported on the second oxide particles 20, oxidation of the precious metals is hardly generated as compared with the case where the precious metals are preferentially supported on the first oxide particle 10. Namely, in the former case, the precious metals tend to keep a zerovalent metal state with high catalytic activity as compared with the latter case. Therefore, the precious metals supported on the second oxide particles 20 maintain a high catalytic activity over a relatively long period of time.

In the exhaust gas-purifying catalyst 1, almost all of the precious metal particles 30 are typically supported on the second oxide particles 20. Namely, almost all of the precious metal particles 30 are not typically in contact with the first oxide particle 10 in which changes in the oxidation number of the constituent elements relatively easily occur. Thus, in this case, a decrease in catalytic activity of the precious metal particles 30 by oxidation hardly occurs.

The ratio of the precious metals supported on the second oxide particles 20 among the precious metals contained in the exhaust gas-purifying catalyst 1 is preferably 50% by mass or more. Namely, it is preferable that the first oxide particle 10 supports no precious metal particles 30, or the first oxide particle 10 supports the precious metal particles 30 in an amount lower than a total amount of the precious metal particles 30 supported on the second oxide particles 20. This allows further deterioration of the performance due to oxidation of the precious metals to be hardly occurred. The ratio is more preferably 70% by mass or more, still more preferably 99% by mass or more.

The amount of the precious metals to be supported on the second oxide particles 20 is, for example, in a range of 0.1 to 10% by mass, typically in a range of 0.3 to 5% by mass based on the mass of the exhaust gas-purifying catalyst 1. When the amount is too low, an amount of precious metal which can be introduced into unit mass of the exhaust gas-purifying catalyst 1 is decreased and its initial performance may be reduced. When the amount is too high, the dispersibility of the precious metal particles 30 is deteriorated and the aggregating of the precious metal particles 30 becomes easy to occur. Therefore, there are possible that purification performance corresponding to the precious metal amount isn't provided. When the exhaust gas-purifying catalyst 1 contains a base material, "the mass of the exhaust gas-purifying catalyst 1" means a mass of a portion excluding the base material from the exhaust gas-purifying catalyst 1.

The exhaust gas-purifying catalyst described above is produced, for example, as follows.

First, the second oxide particles are formed as coprecipitates on the first oxide particle. Specifically, for example, a base is added to a solution containing raw materials of the first oxide particle and the second oxide particles. Then, the obtained solid is filtrated and removed, and the filter cake is subjected to drying and firing processes. Thus, a carrier containing the first oxide particle and the second oxide particles is produced.

Then, the precious metal particles are supported on the second oxide particles constituted the carrier. Specifically, for example, a solution containing the precious metals is added to a dispersion liquid of the carrier. Then, the obtained solid is filtrated and removed, and the filter cake is subjected to drying and firing processes. Thus, the exhaust gas-purifying catalyst described above is obtained.

The exhaust gas-purifying catalyst may be produced as follows. Namely, the exhaust gas-purifying catalyst may be produced using a slurry containing the first oxide particle; composite particles containing the precious metal particles and the second oxide particles supporting the precious metal particles; and citric acid, as described in detail below.

Applying the method allows dispersibility of the second oxide particles on the first oxide particle to be further improved as compared with the case applying the coprecipitation method. Thus, when the method is applied, the performance of the exhaust gas-purifying catalyst can be further improved as compared with the case where the coprecipitation method is applied.

The average particle diameter D50 of the first oxide particle contained in the slurry which is obtained by a laser diffraction and scattering method is, for example, in a range of 1 to 100 $\mu$m, typically in a range of 5 to 30 $\mu$m. When the particle diameter is too small, the aggregating of the second oxide particles becomes relatively easy to occur and the durability of the exhaust gas-purifying catalyst may be reduced. When the particle diameter is too large, effects by addition of citric acid to be described later may become insufficient. In this case, the second oxide particles is relatively hard to be dispersed uniformly on the first oxide particle, thereby the durability of the exhaust gas-purifying catalyst may be reduced.

A composite particle containing precious metal particles and the second oxide particle supporting the precious metal particles is produced, for example, as follows. Namely, the composite particle is produced by, for example, mixing a dispersion solution of the second oxide particles with a dispersion solution of a salt or a complex of a precious metal and then removing at least a part of the dispersion medium from the resulting mixed solution. Alternatively, the composite particle may be produced by impregnating the powder of the second oxide with a dispersion solution of a salt or a complex of a precious metal.

The average particle diameter D50 of the second oxide particles which is obtained by the laser diffraction and scattering method to be used for production of the composite particle is smaller than the average particle diameter of the first oxide particle. Specifically, the average particle diameter D50 of the second oxide particles is set, for example, in a range of 0.05 to 0.5 $\mu$m, typically in a range of 0.1 to 0.3 $\mu$m. When the particle diameter is too small, the aggregating of the second oxide particles becomes relatively easy to occur and the durability of the exhaust gas-purifying catalyst may be reduced. When the particle diameter is too large, the distance between the first oxide particle and the precious metal particles supported on the second oxide particles becomes relatively long. In this case, it may be difficult for the precious metals to benefit from the effects provided by the oxygen storage capacity of the first oxide efficiently, thereby the exhaust gas-purifying performance of the exhaust gas-purifying catalyst may be reduced. The average particle diameter D50 of the second oxide particles is typically larger than the average particle diameter of the precious metal particles.

A ratio of the average particle diameter D50 of the second oxide particles to the average particle diameter D50 of the first oxide particle is, for example, in a range of 0.0005 to 0.5, typically in a range of 0.003 to 0.06. When the ratio is too low, the aggregating of the second oxide particles becomes relatively easy to occur and the durability of the exhaust gas-purifying catalyst may be reduced. When the ratio is too high, the distance between the first oxide particle and the precious metal particles supported on the second oxide particles becomes relatively long. In this case, it may be difficult for the precious metals to benefit from the effects provided by the oxygen storage capacity of the first oxide efficiently, thereby the exhaust gas-purifying performance of the exhaust gas-purifying catalyst may be reduced.

The molar ratio of the second oxide to the first oxide is, for example, in a range of 1:30 to 20:1, typically in a range of 1:1 to 10:1. When the ratio is too low, an amount of precious metal which can be introduced into unit mass of the exhaust gas-purifying catalyst is decreased and its initial performance may be reduced. When the ratio is too high, the aggregating of the second oxide particles becomes relatively easy to occur and the durability of the exhaust gas-purifying catalyst may be reduced.

In the composite particle, the amount of the precious metals to be supported on the second oxide particles is, for example, in a range of 0.1 to 10% by mass, typically in a range of 0.3 to 5% by mass based on the mass of the exhaust gas-purifying catalyst. When the amount is too low, an amount of precious metal which can be introduced into unit mass of the exhaust gas-purifying catalyst is decreased and its initial performance may be reduced. When the amount is too high, the dispersibility of the precious metal particles is deteriorated and the aggregating of the precious metal particles becomes easy to occur. Therefore, there are possible that purification performance corresponding to the precious metal amount isn't provided. Similarly as above, when the exhaust gas-purifying catalyst contains the base material, "the mass of the exhaust gas-purifying catalyst" described above means a mass of a portion excluding the base material from the exhaust gas-purifying catalyst.

As described above, the slurry to be used for production of the exhaust gas-purifying catalyst contains citric acid. The amount of citric acid in the slurry is preferably in a range of 3 to 80% by mass, more preferably in a range of 5 to 50% by mass, still more preferably in a range of 5 to 30% by mass based on the mass of the first oxide.

The exhaust gas-purifying catalyst according to the embodiment is produced by, for example, drying and firing the above slurry. Specifically, the above slurry is first heated to remove at least the part of the dispersion medium contained in the slurry. Then, the resulting product is subjected to, for example, a firing process in air. Thus, the exhaust gas-purifying catalyst is obtained.

When citric acid is omitted in the production method, the gas-purifying performance cannot be improved to the extent of the one obtained when the catalyst is produced using the slurry containing citric acid. Although the reason is not necessarily clear, the present inventors believe it to be as follows.

Citric acid is a polyvalent organic acid with three carboxy groups. These carboxy groups may become negatively-charged carboxylates in the dispersion medium of the slurry. Some of the carboxylates may interact electrically with particles of the first oxide present in the slurry. Other carboxylates may interact electrically with particles of the second oxide present in the slurry. Owing to the interactions, citric acid may bridged between the second oxide particles and the first oxide particle, thereby make it possible for the second particles to approach the first oxide particle.

Typically, a plurality of citric molecules interacts with one particle of the first oxide. These interactions do not specifically occur at a specified portion of the surface of the first oxide particle, and they relatively uniformly occur at an unspecified portion of the surface of the first oxide particle. The citric acids interacting with the first oxide particle may interact with a plurality of the second oxide particles present in the slurry via carboxylate which is not used for the interactions with the first oxide particle.

Therefore, the bridge between the first oxide particle and the second oxide particles by the citric acids are relatively uniformly formed on the surface of the particles of the first oxide. Thus, the use of citric acid allows the second oxide supporting the precious metals to be relatively uniformly dispersed on the first oxide particle. Therefore, a decrease in catalytic activity due to sintering or aggregating of the precious metal particles is hard to occur. That is, a high exhaust gas-purifying performance can be achieved.

When other polyvalent organic acids with a relatively high molecular weight are used in place of citric acid, the viscosity of the slurry becomes too high and thus the catalyst production may become difficult. When citric acid is introduced into the slurry in the form of a salt or complex of constituent elements of the first and/or second oxides, such problems described below are caused. Namely, aggregating of compounds containing the constituent elements may tend to occur in a process of drying the slurry, due to low thermal stability of the salt or complex.

The exhaust gas-purifying catalyst described above may be a monolithic catalyst. In that case, the exhaust gas-purifying catalyst comprises a base material and a catalyst layer formed on the base material. The catalyst layer is obtained by, for example, applying the above slurry onto the base material, followed by drying and firing of the slurry.

Examples

In the following examples, catalysts C2 and C22 to C25 are according to the claimed invention. Catalysts C1, C3 to C21 and C26 are not according to the claims.

<Example 1: Production of catalyst C1>

A composite oxide of zirconium oxide and yttrium oxide was prepared. A molar ratio of zirconium element to yttrium element in the composite oxide was 9:1. The average particle diameter D50 of the composite oxide was 0.2 $\mu$m. Hereinafter, the composite oxide is referred to as "a second oxide ZY1".

First, 50 g (0.41 mol) of the second oxide ZY1 was dispersed in 500 mL of ion exchange water. Then, a rhodium nitrate solution was added to the dispersion liquid to prepare a slurry. Then, the slurry was subjected to suction filtration. Thus, a composite particle of rhodium particles and particles of the second oxide ZY1 supporting the rhodium particles was prepared.

The obtained filtrate was subjected to inductively coupled plasma (ICP) spectral analysis. As a result, it was found that almost all of the rhodium in the slurry was present in a filter cake. Namely, a supporting efficiency of the rhodium on the second oxide particles was approximately 100%. The concentration and additive amount of the rhodium nitrate solution was adjusted so that the rhodium content was 0.5% by mass based on the mass of the exhaust gas-purifying catalyst.

A composite oxide of cerium oxide and zirconium oxide was prepared. The molar ratio of cerium element to zirconium element in the composite oxide was 6:4. The average particle diameter D5 of the composite oxide was 20 $\mu$m. Hereinafter, the composite oxide is referred to as "a first oxide CZ1".

The filter cake described above was dispersed in 500 mL of ion exchange water. Then, 50 g (0.33 mol) of the first oxide CZ1 and 5 g of citric acid were added to the dispersion liquid to prepare a slurry.

Then, the slurry was dried. Specifically, the slurry was heated to remove excess water. Subsequently, the slurry was sintered in air at 500°C for 1 hour. Thus, most of the composite particles of rhodium particles and particles of the second oxide ZY1 supporting those rhodium particles were supported on particles of the first oxide CZ1. Hereinafter, thus obtained powder is referred to as "a powder P1".

Then, the powder P1 was compression-molded. The molded product was ground to obtain a pellet-shaped exhaust gas-purifying catalyst having a particle diameter of about 0.5 to 1.0 mm. Hereinafter, the catalyst is referred to as "a catalyst C1".

<Example 2: Production of catalyst C2>

A composite oxide similar to the second oxide ZY1 except that the average particle diameter D50 was 0.05 $\mu$m was prepared. Hereinafter, the composite oxide is referred to as "a second oxide ZY2".

A composite oxide similar to the first oxide CZ1 except that the average particle diameter D50 was 1 μm was prepared. Hereinafter, the composite oxide is referred to as "a first oxide CZ2".

An exhaust gas-purifying catalyst was produced in the same way as stated for the catalyst C1, except that 3.1 g (0.025 mol) of the second oxide ZY2 was used in place of 50 g (0.41 mol) of the second oxide ZY1 and 115 g (0.75 mol) of the first oxide CZ2 was used in place of 50 g (0.33 mol) of the first oxide CZ1. Hereinafter, the catalyst is referred to as "a catalyst C2".

<Example 3: Production of catalyst C3>

A composite oxide similar to the second oxide ZY1 except that the average particle diameter D50 was 0.5 μm was prepared. Hereinafter, the composite oxide is referred to as "a second oxide ZY3".

An exhaust gas-purifying catalyst was produced in the same way as stated for the catalyst C1, except that 86 g (0.7 mol) of the second oxide ZY3 was used in place of 50 g (0.41 mol) of the second oxide ZY1 and 15 g (0.1 mol) of the first oxide CZ2 was used in place of 50 g (0.33 mol) of the first oxide CZ1. Hereinafter, the catalyst is referred to as "a catalyst C3".

<Example 4: Production of catalyst C4> .

A composite oxide similar to the first oxide CZ1 except that the average particle diameter D50 was 100 μm was prepared. Hereinafter, the composite oxide is referred to as "a first oxide CZ3".

An exhaust gas-purifying catalyst was produced in the same way as stated for the catalyst C1, except that 122 g (1 mol) of the second oxide ZY3 was used in place of 50 g (0.41 mol) of the second oxide ZY1 and 7.7 g (0.05 mol) of the first oxide CZ3 was used in place of 50 g (0.33 mol) of the first oxide CZ1. Hereinafter, the catalyst is referred to as "a catalyst C4".

<Example 5: Production of catalyst C5>

An exhaust gas-purifying catalyst was produced in the same way as stated for the catalyst C4, except that a dinitrodiamine platinum nitrate solution was used in place of the rhodium nitrate solution. Hereinafter, the catalyst is referred to as "a catalyst C5".

A supporting efficiency of the platinum on the second oxide particles was approximately 100%. An amount of platinum supported on the catalyst C5 was 0.5% by mass based on the mass of the catalyst C5.

<Example 6: Production of catalyst C6>

An exhaust gas-purifying catalyst was produced in the same way as stated for the catalyst C4, except that a palladium nitrate solution was used in place of the rhodium nitrate solution. Hereinafter, the catalyst is referred to as "a catalyst C6".

A supporting efficiency of the palladium on the second oxide particles was approximately 100%. An amount of palladium supported on the catalyst C6 was 0.5% by mass based on the mass of the catalyst C6.

<Example 7: Production of catalyst C7>

An exhaust gas-purifying catalyst was produced in the same way as stated for the catalyst C2, except that 134 g (0.875 mol) of the first oxide CZ2 was used in place of 115 g (0.75 mol) of the first oxide CZ2. Hereinafter, the catalyst is referred to as "a catalyst C7".

<Example 8: Production of catalyst C8>

An exhaust gas-purifying catalyst was produced in the same way as stated for the catalyst C4, except that 153 g (1.25 mol) of the second oxide ZY3 was used in place of 122 g (1 mol) of the second oxide ZY3. Hereinafter, the catalyst is referred to as "a catalyst C8".

<Example 9: Production of catalyst C9>

A composite oxide of zirconium oxide and cerium oxide was prepared. The molar ratio of cerium element to zirconium element in the composite oxide was 3:7. The average particle diameter D50 of the composite oxide was 16 μm. Hereinafter, the composite oxide is referred to as "a first oxide ZC1".

An exhaust gas-purifying catalyst was produced in the same way as stated for the catalyst C1, except that 46 g (0.33 mol) of the first oxide ZC1 was used in place of 50 g (0.33 mol) of the first oxide CZ1. Hereinafter, the catalyst is referred to as "a catalyst C9".

<Example 10: Production of catalyst C10>

A composite oxide of cerium oxide and zirconium oxide was prepared. The molar ratio of cerium element to zirconium element in the composite oxide was 5:5. The average particle diameter D50 of the composite oxide was 23 μm. Hereinafter, the composite oxide is referred to as "a first oxide CZ4". The first oxide CZ4 had a pyrochlore structure.
An exhaust gas-purifying catalyst was produced in the same way as stated for the catalyst C1, except that 49 g (0.33 mol) of the first oxide CZ4 was used in place of 50 g (0.33 mol) of the first oxide CZ1. Hereinafter, the catalyst is referred to as "a catalyst C10".

<Example 11: Production of catalyst C11>

A composite oxide similar to the second oxide ZY1 except that the average particle diameter D50 was 0.04 μm was prepared. Hereinafter, the composite oxide is referred to as "a second oxide ZY4".
An exhaust gas-purifying catalyst was produced in the same way as stated for the catalyst C2, except that the second oxide ZY4 was used in place of the second oxide ZY2. Hereinafter, the catalyst is referred to as "a catalyst C11".

<Example 12: Production of catalyst C12>

A composite oxide similar to the first oxide CZ1 except that the average particle diameter D50 was 0.9 μm was prepared. Hereinafter, the composite oxide is referred to as "a first oxide CZ5".
An exhaust gas-purifying catalyst was produced in the same way as stated for the catalyst C2, except that the second oxide CZ5 was used in place of the first oxide CZ2. Hereinafter, the catalyst is referred to as "a catalyst C12".

<Example 13: Production of catalyst C13>

An exhaust gas-purifying catalyst was produced in the same way as stated for the catalyst C2, except that the second oxide ZY4 was used in place of the second oxide ZY2 and 134 g (0.875 mol) of the first oxide CZ5 was used in place of 115 g (0.75 mol) of the first oxide CZ2. Hereinafter, the catalyst is referred to as "a catalyst C13".

<Example 14: Production of catalyst C14>

A composite oxide similar to the second oxide ZY1 except that the average particle diameter D50 was 0.6 μm was prepared. Hereinafter, the composite oxide is referred to as "a second oxide ZY5".
An exhaust gas-purifying catalyst was produced in the same way as stated for the catalyst C4, except that the second oxide ZY5 was used in place of the second oxide ZY3. Hereinafter, the catalyst is referred to as "a catalyst C14".

<Example 15: Production of catalyst C15>

A composite oxide similar to the first oxide CZ1 except that the average particle diameter D50 was 105 μm was prepared. Hereinafter, the composite oxide is referred to as "a first oxide CZ6".
An exhaust gas-purifying catalyst was produced in the same way as stated for the catalyst C4, except that the first oxide CZ6 was used in place of the first oxide CZ3. Hereinafter, the catalyst is referred to as "a catalyst C15".

<Example 16: Production of catalyst C16>

An exhaust gas-purifying catalyst was produced in the same way as stated for the catalyst C15, except that a dinitrodiamine platinum nitrate solution was used in place of the rhodium nitrate solution. Hereinafter, the catalyst is referred to as "a catalyst C16".
The supporting efficiency of the platinum on the second oxide particles was approximately 100%. An amount of platinum supported on the catalyst C16 was 0.5% by mass based on the mass of the catalyst C16.

<Example 17: Production of catalyst C17>

An exhaust gas-purifying catalyst was produced in the same way as stated for the catalyst C15, except that the palladium nitrate solution was used in place of the rhodium nitrate solution. Hereinafter, the catalyst is referred to as "a catalyst C17".

The supporting efficiency of the palladium on the second oxide particles was approximately 100%. An amount of palladium supported on the catalyst C17 was 0.5% by mass based on the mass of the catalyst C17.

<Example 18: Production of catalyst C18>

An exhaust gas-purifying catalyst was produced in the same way as stated for the catalyst C4, except that the second oxide ZY5 was used in place of the second oxide ZY3 and the first oxide CZ6 was used in place of the first oxide CZ3. Hereinafter, the catalyst is referred to as "a catalyst C18".

<Example 19: Production of catalyst C19

(Comparative example)>

An exhaust gas-purifying catalyst was produced in the same way as stated for the catalyst C1, except that 50 g (0.33 mol) of the first oxide CZ1 was used in place of 50 g (0.41 mol) of the second oxide ZY1 and 50 g (0.41 mol) of the second oxide ZY1 was used in place of 50 g (0.33 mol) of the first oxide CZ1. Namely, in this catalyst, the first oxide supporting the rhodium was supported on the second oxide. Hereinafter, the catalyst is referred to as "a catalyst C19".

<Example 20: Production of catalyst C20>

A powder was prepared in the same way as stated for the powder P1, except that citric acid was not used. Hereinafter, the powder is referred to as "a powder P20".

An exhaust gas-purifying catalyst was produced in the same way as stated for the catalyst C1, except that the powder P20 was used in place of the powder P1. Hereinafter, the catalyst is referred to as "a catalyst C20".

<Example 21: Production of catalyst C21>

First, 86 g (0.37 mol) of zirconium oxynitrate ($ZrO(NO_3)_2$) and 11 g (0.04 mol) of yttrium nitrate ($Y(NO_3)_3$) were dissolved in 500 ml of deionized water. Namely, a solution which contains zirconium and yttrium, and which has a ratio of the number of the zirconium atom to the number of the yttrium atom is 9:1 was prepared.

Then, 50 g (0.33 mol) of the first oxide CZ1 was added to the solution. Then, 10% by mass of an ammonium hydroxide ($NH_4OH$) solution was instilled into the solution at room temperature. The instillation was performed until the pH of the solution in the reaction system became 9.0. Subsequently, the reaction system was stirred for 60 minutes. Thus, coprecipitates were produced on the particle of the first oxide CZ1. The obtained solid was filtrated and removed. Then, the filter cake was washed using deionized water.

The solid after washing was dried at 110°C. Then, the solid was calcinated in air at 600°C for 3 hours. The obtained powder was ground using a mortar, followed by sintering in air at 800°C for 5 hours.

A carrier having the composite oxide of zirconium oxide and yttrium oxide being supported on the particle of the first oxide CZ1 was thus obtained. Hereinafter, the carrier is referred to as "a carrier S". The composite oxide supported on the first oxide CZ1 is referred to as "a second oxide ZY6". The molar ratio of zirconium element to yttrium element in the second oxide ZY6 was 9:1.

100 g of the carrier S was dispersed in 500 ml of ion exchange water. Then, a rhodium nitrate solution was added to the dispersion liquid to prepare a slurry. Then, the slurry was subjected to suction filtration. Thus, the rhodium was adsorbed on the particle of the second oxide ZY6.

The obtained filtrate was subjected to an ICP spectral analysis. As a result, it was found that almost all of the rhodium in the slurry was present in a filter cake. Namely, the supporting efficiency of rhodium was approximately 100%. The concentration and additive amount of the rhodium nitrate solution was adjusted so that the rhodium content in the exhaust gas-purifying catalyst was 0.5% by mass based on the mass of the exhaust gas-purifying catalyst.

The above filter cake was dried at 110°C for 12 hours. Then, the filter cake was sintered in air at 500°C. Thus, rhodium particle was supported on the particle of the second oxide ZY6 supported on the first oxide CZ1. Hereinafter, thus obtained powder is referred to as "a powder P21".

An exhaust gas-purifying catalyst was produced in the same way as stated for the catalyst C1, except that the powder P21 was used in place of the powder P1. Hereinafter, the catalyst is referred to as "a catalyst C21".

<Example 22: Production of catalyst C22>

A composite oxide of zirconium oxide and neodymium oxide was prepared. A molar ratio of zirconium element to neodymium element in the composite oxide was 9:1. The average particle diameter D50 of the composite oxide was 0.05 $\mu$m. Hereinafter, the composite oxide is referred to as "a second oxide ZN1".
An exhaust gas-purifying catalyst was produced in the same way as stated for the catalyst C2, except that 3.2 g (0.025 mol) of the second oxide ZN1 was used in place of 3.1 g (0.025 mol) of the second oxide ZY2. Hereinafter, the catalyst is referred to as "a catalyst C22".

<Example 23: Production of catalyst C23>

A composite oxide of zirconium oxide and praseodymium oxide was prepared. A molar ratio of zirconium element to praseodymium element in the composite oxide was 9:1. The average particle diameter D50 of the composite oxide was 0.05 $\mu$m. Hereinafter, the composite oxide is referred to as "a second oxide ZP1".
An exhaust gas-purifying catalyst was produced in the same way as stated for the catalyst C2, except that 3.2 g (0.025 mol) of the second oxide ZP1 was used in place of 3.1 g (0.025 mol) of the second oxide ZY2. Hereinafter, the catalyst is referred to as "a catalyst C23".

<Example 24: Production of catalyst C24>

A composite oxide of cerium oxide, zirconium oxide, and lanthanum oxide was prepared. The molar ratio of cerium element, zirconium element, and lanthanum element in the composite oxide was 6:3:1. The average particle diameter D50 of the composite oxide was 1 $\mu$m. Hereinafter, the composite oxide is referred to as "a first oxide CZL1".
An exhaust gas-purifying catalyst was produced in the same way as stated for the catalyst C2, except that 118 g (0.75 mol) of the first oxide CZL1 was used in place of 115 g (0.75 mol) of the first oxide CZ2. Hereinafter, the catalyst is referred to as "a catalyst C24".

<Example 25: Production of catalyst C25>

A composite oxide of cerium oxide, zirconium oxide, lanthanum oxide, and yttrium oxide was prepared. The molar ratio of cerium element, zirconium element, lanthanum element, and yttrium element in the composite oxide was 6:2:1:1. The average particle diameter D50 of the composite oxide was 1 $\mu$m. Hereinafter, the composite oxide is referred to as "a first oxide CZLY1".
An exhaust gas-purifying catalyst was produced in the same way as stated for the catalyst C2, except that 108 g (0.75 mol) of the first oxide CZLY1 was used in place of 115 g (0.75 mol) of the first oxide CZ2. Hereinafter, the catalyst is referred to as "a catalyst C25".

<Example 26: Production of catalyst C26 (Comparative example)>

A composite oxide of cerium oxide and zirconium oxide was prepared. A molar ratio of cerium element to zirconium element in the composite oxide was 9:1. The average particle diameter D50 of the composite oxide was 0.05 $\mu$m. Hereinafter, the composite oxide is referred to as "an oxide CZ7".
A composite oxide of zirconium oxide and yttrium oxide was prepared. A molar ratio of zirconium element to yttrium element in the composite oxide was 9:1. The average particle diameter D50 of the composite oxide was 1 $\mu$m. Hereinafter, the composite oxide is referred to as "an oxide ZY7".
An exhaust gas-purifying catalyst was produced in the same way as stated for the catalyst C2, except that 3.8 g (0.025 mol) of the oxide CZ7 was used in place of 3.1 g (0.025 mol) of the second oxide ZY2 and 92 g (0.75 mol) of the oxide ZY7 was used in place of 115 g (0.75 mol) of the first oxide CZ2. Hereinafter, the catalyst is referred to as "a catalyst C26".

<Measurement of average particle diameter $D_{av}$>

SEM observations were performed on the catalysts C1 to C26 at 2500-fold to 10000-fold magnification. As for each catalyst, the average particle diameters $D_{av}$ of the first oxide particle and the second oxide particles were determined by the method described above. The results are summarized in Tables 1 to 3 below together with other property values. The molar ratio of the second oxide to the first oxide is described in the column indicated as "Molar ratio" in Tables 1 to 3.

Table 1

| Catalyst | Precious metal | | Second oxide particle | | | First oxide particle | | | Molar ratio | Ratio of covered surface (%) | 50% purifying temperature (°C) | |
|---|---|---|---|---|---|---|---|---|---|---|---|---|
| | Element | Content being supported (% by mass) | Composition | D50 of raw material ($\mu$m) | $D_{av}$ ($\mu$m) | Composition | D50 of raw material ($\mu$m) | $D_{av}$ ($\mu$m) | | | HC | NO$_X$ |
| C1 | Rh | 0.5 | ZY1(Rh) | 0.2 | 0.2 | CZ1 | 20 | 19 | 1.24/1 | 86 | 285 | 280 |
| C2 | Rh | 0.5 | ZY2(Rh) | 0.05 | 0.05 | CZ2 | 1 | 1 | 1/30 | 43 | 291 | 287 |
| C3 | Rh | 0.5 | ZY3(Rh) | 0.5 | 0.5 | CZ2 | 1 | 1 | 7/1 | 89 | 287 | 283 |
| C4 | Rh | 0.5 | ZY3(Rh) | 0.5 | 0.5 | CZ3 | 100 | 90 | 20/1 | 92 | 293 | 289 |
| C5 | Pt | 0.5 | ZY3(Pt) | 0.5 | 0.5 | CZ3 | 100 | 90 | 20/1 | 92 | 380 | 388 |
| C6 | Pd | 0.5 | ZY3(Pd) | 0.5 | 0.5 | CZ3 | 100 | 91 | 20/1 | 93 | 373 | 351 |
| C7 | Rh | 0.5 | ZY2(Rh) | 0.05 | 0.05 | CZ2 | 1 | 1 | 1/35 | 35 | 295 | 290 |
| C8 | Rh | 0.5 | ZY3(Rh) | 0.5 | 0.5 | CZ3 | 100 | 91 | 25/1 | 98 | 299 | 297 |
| C9 | Rh | 0.5 | ZY1(Rh) | 0.2 | 0.2 | ZC1 | 16 | 16 | 1.24/1 | 87 | 286 | 276 |
| C10 | Rh | 0.5 | ZY1(Rh) | 0.2 | 0.2 | CZ4 | 23 | 21 | 1.24/1 | 84 | 279 | 272 |

Table 2

| Catalyst | Precious metal | | Second oxide particle | | | First oxide particle | | | Molar ratio | Ratio of covered surface (%) | 50% purifying temperature (°C) | |
|---|---|---|---|---|---|---|---|---|---|---|---|---|
| | Element | Content being supported (% by mass) | Composition | D50 of raw material ($\mu$m) | $D_{av}$ ($\mu$m) | Composition | D50 of raw material ($\mu$m) | $D_{av}$ ($\mu$m) | | | HC | $NO_X$ |
| C11 | Rh | 0.5 | ZY4(Rh) | 0.04 | 0.04 | CZ2 | 1 | 1 | 1/30 | 36 | 306 | 303 |
| C12 | Rh | 0.5 | ZY2(Rh) | 0.05 | 0.05 | CZ5 | 0.9 | 0.9 | 1/30 | 38 | 305 | 301 |
| C13 | Rh | 0.5 | ZY4(Rh) | 0.04 | 0.04 | CZ5 | 0.9 | 0.9 | 1/35 | 32 | 317 | 314 |
| C14 | Rh | 0.5 | ZY5(Rh) | 0.6 | 0.6 | CZ3 | 100 | 90 | 20/1 | 97 | 310 | 305 |
| C15 | Rh | 0.5 | ZY3(Rh) | 0.5 | 0.5 | CZ6 | 105 | 97 | 20/1 | 97 | 310 | 307 |
| C16 | Pt | 0.5 | ZY3(Pt) | 0.5 | 0.5 | CZ6 | 105 | 96 | 20/1 | 98 | 435 | 429 |
| C17 | Pd | 0.5 | ZY3(Pd) | 0.5 | 0.5 | CZ6 | 105 | 97 | 20/1 | 97 | 414 | 393 |
| C18 | Rh | 0.5 | ZY5(Rh) | 0.6 | 0.6 | CZ6 | 105 | 97 | 20/1 | 99 | 322 | 318 |
| C19 | Rh | 0.5 | ZY1 | 0.2 | 0.2 | CZ1(Rh) | 20 | 20 | 1.24/1 | 93 | 352 | 345 |
| C20 | Rh | 0.5 | ZY1(Rh) | 0.2 | 0.2 | CZ1 | 20 | 19 | 1.24/1 | 24 | 344 | 332 |

Table 3

| Catalyst | Precious metal | | Second oxide particle | | | First oxide particle | | | | Ratio of covered surface (%) | 50% purifying temperature (°C) | |
|---|---|---|---|---|---|---|---|---|---|---|---|---|
| | Element | Content being supported (% by mass) | Composition | D50 of raw material (μm) | $D_{av}$ (μm) | Composition | D50 of raw material (μm) | $D_{av}$ (μm) | Molar ratio | | HC | $NO_x$ |
| C21 | Rh | 0.5 | ZY6(Rh) | - | 0.4 | CZ1 | 20 | 20 | 1.24/1 | 51 | 299 | 295 |
| C22 | Rh | 0.5 | ZN1(Rh) | 0.05 | 0.05 | CZ2 | 1 | 1 | 1/30 | 44 | 294 | 288 |
| C23 | Rh | 0.5 | ZP1(Rh) | 0.05 | 0.05 | CZ2 | 1 | 1 | 1/30 | 40 | 299 | 300 |
| C24 | Rh | 0.5 | ZY2(Rh) | 0.05 | 0.05 | CZL1 | 1 | 1 | 1/30 | 45 | 289 | 287 |
| C25 | Rh | 0.5 | ZY2(Rh) | 0.05 | 0.05 | CZLY1 | 1 | 1 | 1/30 | 44 | 283 | 280 |
| C26 | Rh | 0.5 | CZ7(Rh) | 0.05 | 0.05 | ZY7 | 1 | 1 | 1/30 | 40 | 355 | 349 |

<Coverage>

As for the catalysts C1 to C26, the ratio of the surface area of the first oxide particle covered with the second oxide particles was determined by the method described above. The results are summarized in Tables 1 to 3 above.

<Evaluation of exhaust gas-purifying performance>

First, the catalysts C1 to C26 were subjected to a durability test, respectively. Specifically, the catalyst was placed in a flow-type endurance test device, and gas including nitrogen as a main component was fed into the catalyst layer at a flow rate of 500 mL/min for 20 hours. During this period, the catalyst layer temperature was kept 900°C. As the gas for feeding into the catalyst bed, a lean gas produced by adding 1% oxygen ($O_2$) to nitrogen ($N_2$) and a rich gas produced by adding 2% CO to $N_2$ were used. These gases were alternated every 5 minutes.

Then, as for the catalysts C1 to C26 after the durability test, HC purifying performance and $NO_X$ purifying performance were evaluated. First, the catalyst was placed in a normal pressure fixed bed circulation reaction system. The temperature of the catalyst layer was increased from 100°C to 500°C at a rate of 12°C/min while flowing a model gas into the catalyst bed. The exhaust gas purification efficiency during the period was continuously measured. A gas containing stoichiometric equivalent amount of an oxidizing component ($O_2$ and $NO_X$) and a reducing component (CO, HC, hydrogen ($H_2$)) was used as the model gas.

The results are summarized in Tables 1 to 3 above. The minimum temperature of the catalyst layer when 50% or more of the components contained in the model gas has been purified is described in the column indicated as "50% purifying temperature" in Tables 1 to 3.

As is apparent from comparisons the catalysts C1 to C4, C7 to C15 and C18 and catalyst C19, when the precious metal was supported on the second oxide particles, a more high exhaust gas-purifying performance was achieved as compared with the case where the precious metal was supported on the first oxide particle.

Further, as is apparent from comparisons between the catalysts C1 and C20, when a catalyst was produced using a slurry containing citric acid, a more high exhaust gas-purifying performance was achieved as compared with the case where citric acid was not used.

Further, as is apparent from comparisons among the catalysts C1 to C18, a particularly high exhaust gas-purifying performance was achieved by setting the average particle diameter D50 of the first oxide particle in a range of 1 to 100 $\mu$m. A particularly high exhaust gas-purifying performance was achieved by setting the average particle diameter D50 of the second oxide particles in a range of 0.05 to 0.5 $\mu$m. Additionally, a particularly high exhaust gas-purifying performance was achieved by setting the molar ratio of the second oxide to the first oxide in a range of 1:30 to 20:1.

<Evaluation of uniformity of distribution of second oxide particles on first oxide particle>

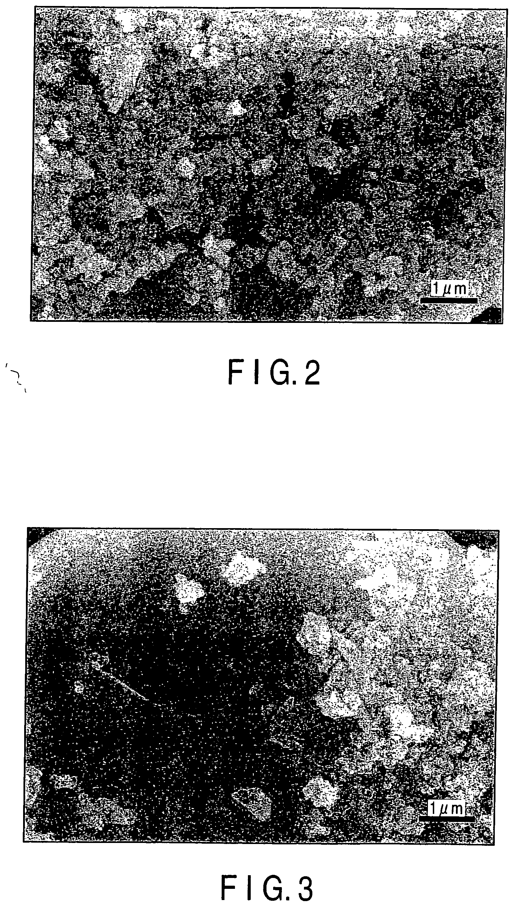

Surface observations using a field emission type SEM (FE-SEM) were performed for the powders P1 and P20, respectively. First, the powder was placed on an FE-SEM sample stage. Next, the surfaces of the first oxide particles contained in the powders P1 and P20 were observed at 10000-fold magnification. These results are shown in FIG. 2 and FIG. 3.

FIG. 2 is an SEM photograph of a surface of a first oxide particle contained in a powder according to Example 1. FIG. 3 is an SEM photograph of a surface of a first oxide particle contained in a powder according to Example 20.

As is apparent from the SEM photographs, the second oxide particles were relatively uniformly distributed on the first oxide particle contained in the powder P1. On the other hand, the second oxide particles were relatively ununiformly distributed on the first oxide particle contained in the powder P20.

**Claims**

**1.** An exhaust gas-purifying catalyst comprising:

a first oxide particle with an oxygen storage capacity;
one or more second oxide particles partially covering a surface of the first oxide particle and having an oxygen storage capacity lower than that of the first oxide particle, an average particle diameter $D_{av}$ of the one or more second oxide particles obtained by scanning electron microscope observation being smaller than that of the first oxide particle; and
precious metal particles supported on at least one of the second oxide particles,
wherein the second oxide is cerium-free or the second oxide contains cerium and the cerium content of the second oxide is smaller than that of the first oxide, and

wherein 40 to 50 % of the surface of the first oxide particle is covered with the one or more of the second oxide particles, and

wherein the average particle diameter $D_{AV}$ and the surface coverage of the first oxide particle of 40-50 % both are determined in accordance with the description in section "Best Mode for Carrying out the Invention".

2. The exhaust gas-purifying catalyst according to claim 1, wherein the first oxide contains cerium.

3. The exhaust gas-purifying catalyst according to any one of claims 1 to 2, wherein the second oxide is substantially cerium-free.

4. The exhaust gas-purifying catalyst according to any one of claims 1 to 3, wherein the average particle diameter $D_{av}$ of the first oxide particle is in a range of 1.0 to 100 $\mu$m.

5. The exhaust gas-purifying catalyst according to any one of claims 1 to 4, wherein the average particle diameter $D_{av}$ of the second oxide particles is in a range of 0.05 to 0.5 $\mu$m.

6. The exhaust gas-purifying catalyst according to any one of claims 1 to 5, wherein a molar ratio of the second oxide to the first oxide is in a range of 1:30 to 20:1.

7. The exhaust gas-purifying catalyst according to any one of claims 1 to 6, wherein the first oxide particle supports no precious metal particles, or the first oxide particle supports the precious metal particles in an amount lower than a total amount of the precious metal particles supported on the second oxide particles.

8. An exhaust gas-purifying catalyst according to claim 1, produced by drying and firing a slurry, the slurry comprising:

a first oxide particle with an oxygen storage capacity;
composite particles containing precious metal particles and second oxide particles, the second oxide particles supporting the precious metal particles and having an oxygen storage capacity lower than that of the first oxide particle, and the second oxide particles having an average particle diameter D50 obtained by a laser diffraction and scattering method smaller than that of the first oxide particle; and citric acid.

9. The exhaust gas-purifying catalyst according to claim 8, wherein the average particle diameter D50 of the first oxide particle is in a range of 1.0 to 100 $\mu$m.

10. The exhaust gas-purifying catalyst according to claim 8 or 9, wherein the average particle diameter D50 of the second oxide particles is within a range of 0.05 to 0.5 $\mu$m.

11. A method of producing an exhaust gas-purifying catalyst according to claim 8, comprising:

drying and firing a slurry containing a first oxide particle with an oxygen storage capacity;
composite particles containing precious metal particles and second oxide particles, the second oxide particles supporting the precious metal particles and having an oxygen storage capacity lower than that of the first oxide particle, and the second oxide particles having an average particle diameter D50 obtained by a laser diffraction and scattering method smaller than that of the first oxide particle; and citric acid.

**Patentansprüche**

1. Ein Abgasreinigungskatalysator aufweisend:

Ein erstes Oxidpartikel mit einer Sauerstoffspeicherkapazität;
ein oder mehrere zweite Oxidpartikel, die teilweise eine Oberfläche des ersten Oxidpartikels bedecken und die eine Sauerstoffspeicherkapazität aufweisen, die niedriger ist als die des ersten Oxidpartikels, wobei ein mittlerer Partikeldurchmesser $D_{av}$ des einen oder der mehreren zweiten Oxidpartikel erhalten durch Rasterelektronenmikroskopbeobachtung kleiner ist als der des ersten Oxidpartikels; und
auf mindestens einem der zweiten Oxidpartikel geträgerte Edelmetallpartikel,
wobei das zweite Oxid Cer-frei ist oder das zweite Oxid Cer enthält und der Cer-Gehalt des zweiten Oxids kleiner ist als der des ersten Oxids, und

wobei 40 bis 50% der Oberfläche des ersten Oxidpartikels mit dem einen oder mehreren der zweiten Oxid-Partikel bedeckt ist, und

wobei der mittlere Partikeldurchmesser $D_{av}$ und die Flächendeckung des ersten Oxidpartikels von 40 - 50% beide gemäss der Beschreibung im Abschnitt "Bester Modus zur Ausführung der Erfindung" bestimmt werden.

2. Abgasreinigungskatalysator nach Anspruch 1, wobei das erste Oxid Cer enthält.

3. Abgasreinigungskatalysator nach einem der Ansprüche 1 bis 2, wobei das zweite Oxid im Wesentlichen Cer-frei ist.

4. Abgasreinigungskatalysator nach einem der Ansprüche 1 bis 3, wobei der mittlere Partikeldurchmesser $D_{av}$ des ersten Oxidpartikels in einem Bereich von 1,0 bis 100 $\mu$m liegt.

5. Abgasreinigungskatalysator nach einem der Ansprüche 1 bis 4, wobei der mittlere Partikeldurchmesser $D_{av}$ der zweiten Oxidpartikel in einem Bereich von 0,05 bis 0,5 $\mu$m liegt.

6. Abgasreinigungskatalysator nach einem der Ansprüche 1 bis 5, wobei ein Molverhältnis des zweiten Oxids zum ersten Oxid in einem Bereich von 1:30 bis 20:1 liegt.

7. Abgasreinigungskatalysator nach einem der Ansprüche 1 bis 6, wobei das erste Oxidpartikel keine Edelmetallpartikel trägt, oder das erste Oxidpartikel die Edelmetallpartikel in einer Menge trägt, die geringer ist als eine Gesamtmenge der auf den zweiten Oxidpartikeln abgeschiedenen Edelmetallpartikel.

8. Abgasreinigungskatalysator nach Anspruch 1, hergestellt durch Trocknen und Brennen einer Aufschlämmung, wobei die Aufschlämmung aufweist:

Ein erstes Oxidpartikel mit einer Sauerstoffspeicherkapazität;
Kompositpartikel enthaltend Edelmetallpartikel und zweite Oxidpartikel, wobei die zweiten Oxidpartikel die Edelmetallpartikel trägern und eine Sauerstoffspeicherkapazität aufweisen, die niedriger ist als die des ersten Oxidpartikels, und wobei die zweiten Oxidpartikel einen mittleren Partikeldurchmesser D50 aufweisen, erhalten durch Laserdiffraktion und Streuverfahren, der kleiner als der des ersten Oxidpartikels ist; und
Zitronensäure.

9. Abgasreinigungskatalysator nach Anspruch 8, wobei der mittlere Partikeldurchmesser D50 des ersten OxidPartikels in einem Bereich von 1,0 bis 100 $\mu$m liegt.

10. Abgasreinigungskatalysator nach Anspruch 8 oder 9, wobei der mittlere Partikeldurchmesser D50 der zweiten Oxidpartikel in einem Bereich von 0,05 bis 0,5 $\mu$m ist.

11. Verfahren zur Herstellung eines Abgasreinigungskatalysators nach Anspruch 8, umfassend:

Trocknen und Brennen einer Aufschlämmung, die ein erstes Oxidpartikel mit einer Sauerstoffspeicherkapazität enthält;
Kompositpartikel enthaltend Edelmetallpartikel und zweite Oxidpartikel, wobei die zweiten Oxidpartikel die Edelmetallpartikel tragen und eine Sauerstoffspeicherkapazität aufweisen, die niedriger ist als die des ersten Oxidpartikels, und wobei die zweiten Oxidpartikel einen mittleren Partikeldurchmesser D50 aufweisen, erhalten durch Laserdiffraktion und Streuverfahren, der kleiner als der des ersten Oxidpartikels ist; und
Zitronensäure.

**Revendications**

1. Catalyseur de purification de gaz d'échappement comprenant :

une particule de premier oxyde ayant une capacité de stockage d'oxygène ;
une ou plusieurs particule(s) de deuxième oxyde recouvrant partiellement une surface de la particule de premier oxyde et ayant une capacité de stockage d'oxygène inférieure à celle de la particule de premier oxyde, un diamètre moyen de particule $D_{av}$ de la ou des plusieurs particule(s) de deuxième oxyde obtenu par observation au microscope électronique à balayage étant inférieur à celui de la particule de premier oxyde ; et

des particules de métal précieux supportées par au moins l'une des particules de deuxième oxyde,
dans lequel le deuxième oxyde est exempt de cérium ou le deuxième oxyde contient du cérium et la teneur en cérium du deuxième oxyde est inférieure à celle du premier oxyde, et
dans lequel 40 à 50% de la surface de la particule de premier oxyde est recouverte de la ou des plusieurs particule(s) parmi les particules de deuxième oxyde, et
dans lequel le diamètre moyen de particule $D_{av}$ et la couverture de surface de la particule de premier oxyde de 40 à 50% sont tous deux déterminés conformément à la description dans la section « Meilleur mode de réalisation de l'invention ».

2. Catalyseur de purification de gaz d'échappement selon la revendication 1, dans lequel le premier oxyde contient du cérium.

3. Catalyseur de purification de gaz d'échappement selon l'une quelconque des revendications 1 et 2, dans lequel le deuxième oxyde est sensiblement exempt de cérium.

4. Catalyseur de purification de gaz d'échappement selon l'une quelconque des revendications 1 à 3, dans lequel le diamètre moyen de particule $D_{av}$ de la particule de premier oxyde est compris dans la plage allant de 1,0 à 100 $\mu$m.

5. Catalyseur de purification de gaz d'échappement selon l'une quelconque des revendications 1 à 4, dans lequel le diamètre moyen de particule $D_{av}$ des particules de deuxième oxyde est compris dans la plage allant de 0,05 à 0,5 $\mu$m.

6. Catalyseur de purification de gaz d'échappement selon l'une quelconque des revendications 1 à 5, dans lequel un rapport molaire du deuxième oxyde au premier oxyde est compris dans la plage allant de 1:30 à 20:1.

7. Catalyseur de purification de gaz d'échappement selon l'une quelconque des revendications 1 à 6, dans lequel la particule de premier oxyde ne supporte pas de particules de métal précieux, ou la particule de premier oxyde supporte les particules de métal précieux en une quantité inférieure à une quantité totale des particules de métal précieux supportées par les particules de deuxième oxyde.

8. Catalyseur de purification de gaz d'échappement selon la revendication 1, produit par séchage et cuisson d'une suspension, la suspension comprenant :

une particule de premier oxyde ayant une capacité de stockage d'oxygène ;
des particules composites contenant des particules de métal précieux et des particules de deuxième oxyde, les particules de deuxième oxyde supportant les particules de métal précieux et ayant une capacité de stockage d'oxygène inférieure à celle de la particule de premier oxyde, et les particules de deuxième oxyde ayant un diamètre moyen de particule D50 obtenu par un procédé de diffraction et de diffusion laser inférieur à celui de la particule de premier oxyde ; et l'acide citrique.

9. Catalyseur de purification de gaz d'échappement selon la revendication 8, dans lequel le diamètre moyen de particule D50 de la particule de premier oxyde est compris dans une plage allant de 1,0 à 100 $\mu$m.

10. Catalyseur de purification de gaz d'échappement selon la revendication 8 ou 9, dans lequel le diamètre moyen de particule D50 des particules de deuxième oxyde est compris dans la plage allant de 0,05 à 0,5 $\mu$m.

11. Procédé de production d'un catalyseur de purification de gaz d'échappement selon la revendication 8, comprenant :

le séchage et la cuisson d'une suspension contenant une particule de premier oxyde ayant une capacité de stockage d'oxygène ;
des particules composites contenant des particules de métal précieux et des particules de deuxième oxyde, les particules de deuxième oxyde supportant les particules de métal précieux et ayant une capacité de stockage d'oxygène inférieure à celle de la particule de premier oxyde, et les particules de deuxième oxyde ayant un diamètre moyen de particule D50 obtenu par un procédé de diffraction et de diffusion laser inférieur à celui de la particule de premier oxyde ; et l'acide citrique.

FIG. 1

FIG.2

FIG.3

**EP 2 431 092 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8155302 A